# FASCICULE DE BREVET EUROPEEN

(11) **EP 2 265 457 B1**
(45) Date de publication et mention de la délivrance du brevet: **23.05.2012**
(21) Numéro de dépôt: 09734472.5
(22) Date de dépôt: 23.03.2009
(51) Int. Cl.: B60K 11/08, B62D 25/08, B62D 65/02, B62D 65/16

(54) **CONVERGENT LATERAL POUR UNE STRUCTURE DE FACE AVANT DE VEHICULE, STRUCTURE DE FACE AVANT CORRESPONDANTE, ET PROCEDE DE MONTAGE D'UNE TELLE STRUCTURE**
SEITENDIFFUSOR FÜR EINE FAHRZEUGVORDERFLÄCHENSTRUKTUR, ENTSPRECHENDE VORDERFLÄCHENSTRUKTUR UND VERFAHREN ZUR MONTAGE EINER SOLCHEN STRUKTUR
VEHICLE FRONT SURFACE STRUCTURE SIDE DIFFUSER, CORRESPONDING FRONT SURFACE STRUCTURE, AND METHOD FOR ASSEMBLING SUCH STRUCTURE

(30) Priorité: 22.04.2008 FR 0802231
(43) Date de publication de la demande: 29.12.2010
(73) Titulaire: Renault s.a.s., 92100 Boulogne-Billancourt (FR)
(72) Inventeur: VE LASCO, Angel, F-78960 Voisins Le Bretonneux (FR); CARRON, Matthieu, F-78210 Saint Cyr L'ecole (FR); MASSOULIE, Juliette, F-78950 Gambais (FR)
(86) Numéro de dépôt international: PCT/FR2009/050494
(87) Numéro de publication internationale: WO 2009/130429

(56) Documents cités:
- EP-A- 1 352 810
- EP-A- 1 785 306
- DE-A1-102007 024 898

## Description

L'invention concerne un convergent latéral pour une structure de face avant de véhicule, une structure de face avant correspondante et un procédé de montage d'une telle structure de face avant.

Un véhicule possède sur sa face avant des entrées d'air permettant l'entrée d'un flux d'air pour le refroidissement du moteur. Ces entrées d'air consistent en des orifices réalisés dans le pare chocs avant du véhicule. Le refroidissement du moteur est obtenu grâce à des échangeurs (radiateur, refroidisseur d'air, condenseur) situés en face avant, devant le moteur, et traversés par le flux d'air.

Afin de diriger le flux d'air entrant vers les échangeurs, les véhicules sont généralement équipés de convergents qui sont des pièces, le plus souvent en plastique, disposées de manière à guider l'air depuis les entrées d'air du pare-chocs jusqu'aux échangeurs. Ces convergents sont ainsi disposés entre le pare-chocs et les échangeurs. On distingue les convergents latéraux, disposés sensiblement verticalement suivant la direction longitudinale du véhicule, et le convergent supérieur, disposé sensiblement horizontalement au dessus des échangeurs.

Entre les échangeurs et le pare-chocs avant, les véhicules sont également équipés d'une traverse extrême avant qui traverse la zone entre les échangeurs et le pare-chocs. Cette traverse extrême avant rend difficile le montage des convergents latéraux qu'elle traverse.

En effet, les convergents latéraux ne peuvent être montés avant la traverse extrême, car leur position rend inaccessible certains points de fixation de la traverse. De fait, la traverse est montée avant les convergents latéraux, rendant difficile le montage des convergents latéraux en raison de l'accessibilité réduite de leurs points de fixation, comme décrit notamment dans le document EP 1 352 810.

Une solution consiste à réaliser les convergents latéraux en deux parties, une partie fixée sur les échangeurs et l'autre fixée sur le pare-chocs. Toutefois, il est difficile de rendre étanche la zone de jonction entre les deux parties de convergent latéral.

Du fait de la présence de cette traverse, il est ainsi difficile de rendre étanche la zone entre les échangeurs et le pare-chocs et l'on peut observer des fuites d'air au niveau de la zone entre les échangeurs et le pare-chocs, au détriment du refroidissement du moteur.

Or, il apparaît actuellement nécessaire d'améliorer le débit d'air traversant les échangeurs afin d'améliorer leurs performances de refroidissement et permettre ainsi de répondre aux nouvelles réglementations antipollution qui ont augmenté les besoins en refroidissement de certaines motorisations, telles que les motorisations diesel couplées à des boîtes automatiques.

Il existe donc un besoin d'améliorer l'étanchéité de la zone entre les échangeurs et le pare-chocs afin de diriger un maximum du flux d'air entrant vers les échangeurs et améliorer ainsi le refroidissement du moteur.

Un premier objectif de l'invention est de proposer un convergent latéral pouvant être facilement monté sur des échangeurs après montage de la traverse extrême avant d'un véhicule.

Un second objectif de l'invention est d'améliorer l'étanchéité de la zone entre les échangeurs et le pare-chocs de la structure avant d'un véhicule.

A cet effet, l'objet de l'invention concerne un convergent latéral pour structure de face avant de véhicule, destiné à guider l'air entrant par des entrées d'air du pare-chocs du véhicule jusqu'aux échangeurs situés en avant du moteur, ledit convergent étant formé d'une plaque dont le bord arrière est destiné à venir en appui contre les échangeurs et le bord avant est destiné à venir en appui contre le pare-chocs, ledit bord avant comportant en outre un logement apte à recevoir la traverse extrême avant de ladite structure de face avant, caractérisé en ce que le bord arrière du convergent est pourvu :
- d'un axe de pivotement apte à coopérer avec un organe de réception correspondant prévu sur les échangeurs, et
- d'un organe de fixation apte à coopérer avec un organe de fixation correspondant prévu sur les échangeurs suite à une rotation du convergent latéral autour dudit axe de pivotement.

Le convergent latéral selon l'invention peut ainsi être facilement positionné et fixé après le montage de la traverse extrême avant. La coopération de l'axe de pivotement avec l'organe de réception correspondant des échangeurs assure un bon positionnement du convergent par rapport aux échangeurs, la fixation étant assurée par les organes de fixation correspondants après une simple rotation du convergent latéral. Cette conception permet de réaliser le convergent latéral en une pièce unique, limitant ainsi les fuites d'air observées pour les convergents réalisés en plusieurs parties.

Avantageusement, les organes de fixation sont conçus pour permettre une fixation réversible des convergents latéraux, rendant possible leur démontage.

Avantageusement, l'axe de pivotement est situé dans la moitié inférieure du bord arrière.

Plus particulièrement, l'axe de pivotement est situé sensiblement en dessous du logement pour la traverse, par exemple à distance de ce dernier, dans une zone facile d'accès.

Avantageusement, l'organe de fixation est situé à proximité de l'extrémité supérieure du bord arrière.

Plus particulièrement, l'organe de fixation est situé au dessus du logement pour la traverse, à distance de ce dernier, dans une zone facile d'accès.

Il est préférable de situer l'axe de pivotement et l'organe de fixation à distance l'un de l'autre afin que les deux points de positionnement et de fixation aux échangeurs ainsi obtenus soient suffisamment éloignés pour assurer un bon maintien du convergent sur les échangeurs.

Avantageusement, l'organe de fixation comprend une partie de guidage apte à guider son introduction dans l'organe de fixation correspondant des échangeurs, et une partie de mise en prise apte à venir en prise avec l'organe de fixation correspondant des échangeurs.

Une telle conception permet de faciliter la fixation de l'organe de fixation sur les échangeurs.

Avantageusement, l'organe de fixation est supporté par un support présentant une forme arquée dans un plan perpendiculaire à l'axe de pivotement.

Les dimensions et la courbure de cette forme arquée, par exemple arrondie, sont choisies de manière à permettre la coopération de l'organe de fixation du convergent avec l'organe de fixation correspondant des échangeurs suite à une rotation autour de l'axe de pivotement du convergent.

L'invention concerne également une structure de face avant de véhicule comprenant des échangeurs destinés à refroidir le moteur du véhicule et une traverse extrême avant, caractérisée en ce que les échangeurs sont pourvus d'organes de réception et d'organes de fixation aptes à coopérer avec l'axe de pivotement et l'organe de fixation d'un convergent latéral selon l'invention afin de positionner et fixer un convergent latéral aux échangeurs, de part et d'autre de ces derniers.

Enfin, l'invention concerne un procédé de montage d'une structure de face avant de véhicule comprenant des échangeurs, une traverse extrême avant et deux convergents latéraux selon l'invention, les échangeurs étant pourvus d'organes de réception et d'organes de fixation aptes à coopérer avec l'axe de pivotement et l'organe de fixation d'un convergent latéral selon l'invention afin de positionner et fixer un convergent latéral aux échangeurs, de part et d'autre de ces derniers, le procédé comprenant les étapes suivantes :
(i) fixation de la traverse extrême avant,
(ii) positionnement des convergents latéraux entre la traverse extrême avant et les échangeurs par insertion des axes de pivotement des convergents dans les organes de réception correspondants des échangeurs, chaque convergent étant alors dans une position intermédiaire de montage,
(iii) pivotement des convergents autour de leur axe jusqu'à coopération de leur organe de fixation avec l'organe de fixation correspondant des échangeurs.

L'invention est maintenant décrite en référence aux dessins annexés, non limitatifs, dans lesquels :
- la figure 1 est une vue de face d'une structure de face avant de véhicule automobile selon l'invention ;

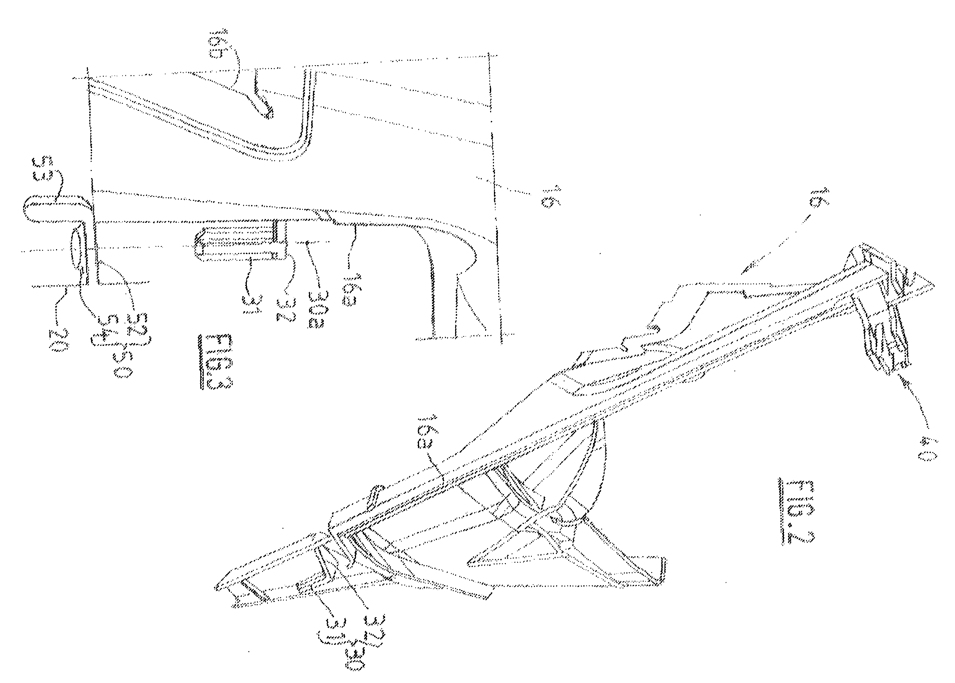

- la figure 2 est une vue en perspective d'un convergent latéral selon l'invention ;
- la figure 3 est représente le convergent latéral représenté sur la figure 2 et son axe de pivotement ;
- la figure 4 représente un agrandissement de l'organe de fixation du convergent de la figure 2 ;
- la figure 5 représente la coopération des organes de fixation du convergent latéral et des échangeurs ;
- la figure 6 est une vue de dessous de l'organe de fixation représenté figure 4.

Dans la suite, les directions avant et arrière font référence aux directions avant et arrière du véhicule, de même la direction longitudinale renvoie à la direction longitudinale du véhicule.

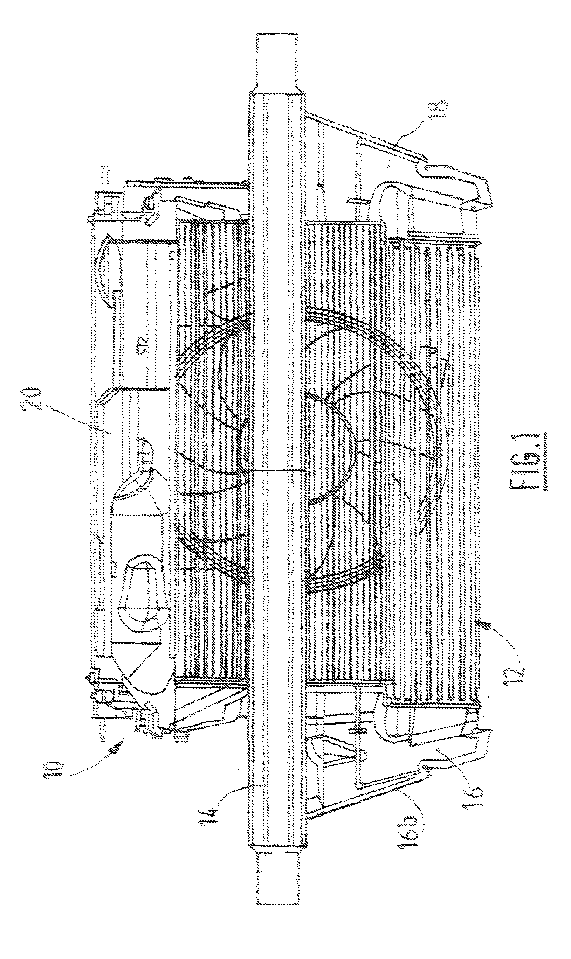

La figure 1 représente une structure de face avant 10 de véhicule comprenant des échangeurs 12 destinés à refroidir le moteur du véhicule.

Cette structure avant comprend également une traverse extrême avant 14, située entre les échangeurs 12 et le pare-chocs avant du véhicule (non représenté).

Sur la figure 1 sont également visibles deux convergents latéraux 16, 18 et un convergent supérieur 20 destinés à guider l'air entrant par des entrées d'air du pare-chocs du véhicule jusqu'aux échangeurs 12 situés en avant du moteur du véhicule.

Les convergents latéraux 16, 18 sont identiques par symétrie par rapport à un plan longitudinal vertical, seule la structure de l'un d'eux est décrite en référence aux figures.

Le convergent latéral 16 est formé d'une plaque dont le bord arrière 16a est destiné à venir en appui contre les échangeurs 12 et le bord avant 16b est destiné à venir en appui contre le pare-chocs (non représenté), ledit bord avant 16b comportant en outre un logement apte à recevoir la traverse extrême avant 14 du véhicule. Les bords arrière 16a et avant 16b s'étendent suivant une direction sensiblement verticale. Dans l'exemple, le convergent est formé d'une plaque réalisée en une seule pièce.

Selon l'invention, le bord arrière 16a du convergent est pourvu :
- d'un axe de pivotement 30 apte à coopérer avec un organe de réception 50 correspondant prévu sur les échangeurs 12, et
- d'un organe de fixation 40 apte à coopérer avec un organe de fixation 60 correspondant prévu sur les échangeurs 12 suite à une rotation du convergent latéral autour dudit axe de pivotement 30.

Dans l'exemple représenté, l'axe de pivotement 30 est situé dans la moitié inférieure du bord arrière 16a, et plus particulièrement au dessous du logement destiné à recevoir la traverse extrême avant 14.

Cet axe de pivotement 30 est formé d'un doigt 31 sensiblement vertical d'axe 30a porté par une patte de support 32, l'extrémité libre du doigt étant dirigée vers le bas du convergent. Cette extrémité libre est de préférence en biseau ou conique afin de faciliter son insertion dans l'organe de fixation correspondant des échangeurs.

L'organe de réception 50 correspondant des échangeurs est formé d'une bague 52, de forme conique pour faciliter l'insertion du doigt 31, supportée par une patte 54. Cette dernière se prolonge en une languette 53 sensiblement verticale qui s'étend le long du doigt 31, sur sensiblement toute la hauteur de ce dernier, entre le doigt et le convergent, lorsque le convergent est fixé aux échangeurs. La languette 53 assure une fonction de guidage et de maintien du doigt 31.

En variante, l'organe de réception peut être un fourreau ou un manchon.

Dans l'exemple représenté, l'organe de fixation 40 du convergent est situé à proximité de l'extrémité supérieure du bord arrière, il est notamment situé au dessus du logement pour la traverse extrême avant 14.

L'organe de fixation 40 comprend une partie de guidage 42 apte à guider son introduction dans l'organe de fixation 60 correspondant des échangeurs, et une partie de mise en prise 44 apte à venir en prise avec l'organe de fixation 60 correspondant des échangeurs.

L'organe de fixation 40 est en outre supporté par un support 46 présentant une forme arquée dans un plan perpendiculaire à l'axe de pivotement 30.

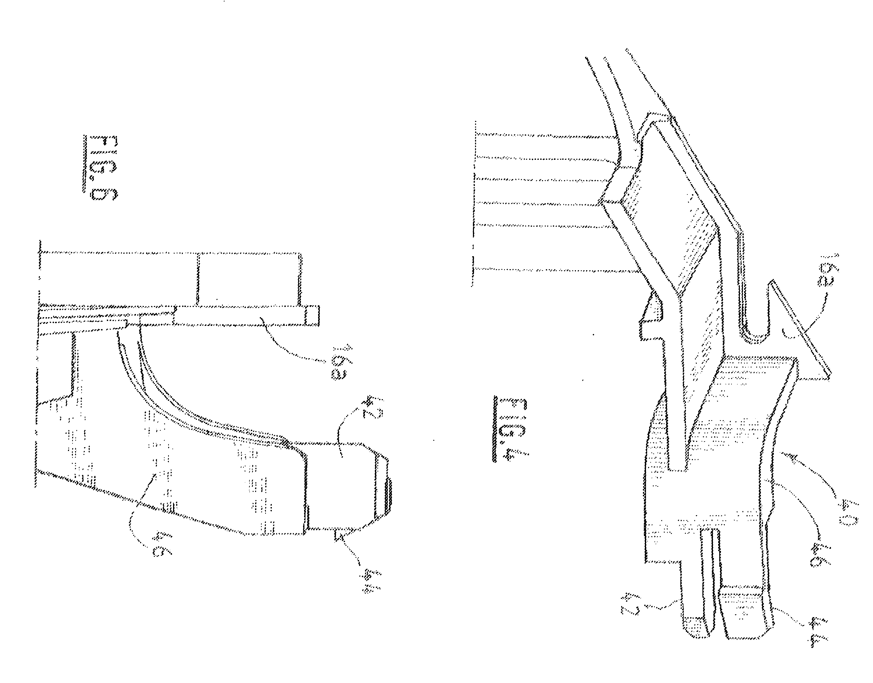

Tel que visible sur les figures 4 et 6, la partie de guidage 42 est formée d'une patte sensiblement horizontale dont l'extrémité est biseautée afin de faciliter son introduction dans l'organe de fixation 60 correspondant des échangeurs. La partie de mise en prise 44 est formée d'une patte d'encliquetage.

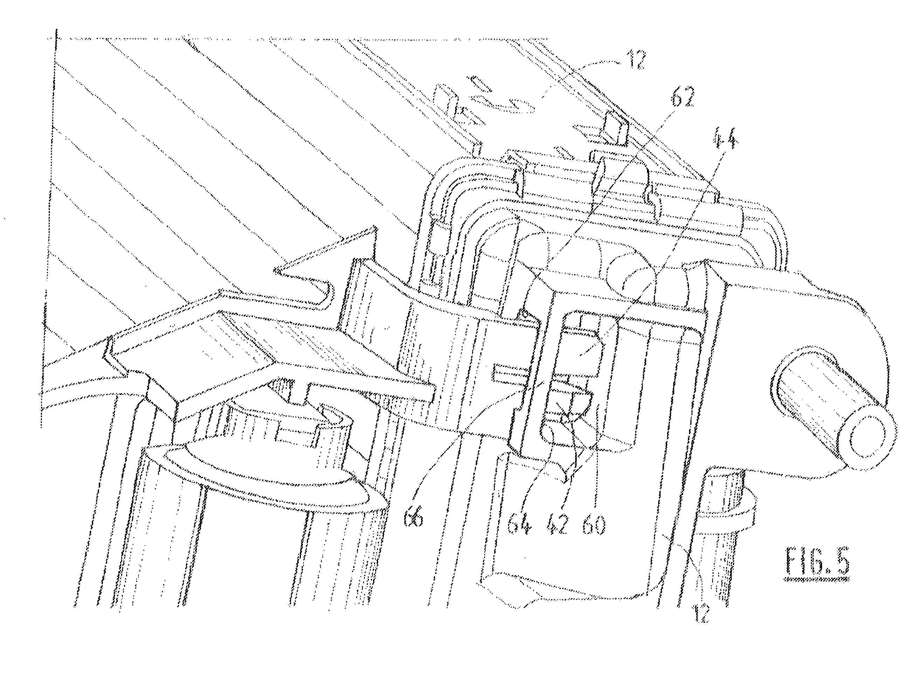

Tel que visible sur la figure 5, l'organe de fixation est formé d'une cavité 60 comprenant une première ouverture 62 permettant l'introduction de la partie de guidage 42 et de la partie de mise en prise 44. La largeur de la partie de guidage 42 correspondant sensiblement à la largeur de cet orifice 60, ce qui permet de positionner correctement l'organe de fixation. La cavité 60 comprend une deuxième ouverture 64 qui s'étend dans un plan perpendiculaire au plan de la première ouverture 62. Cette deuxième ouverture 64 est suffisamment proche de la première ouverture 62 pour former avec cette dernière un montant 66 avec lequel la partie de mise en prise 44 va pouvoir coopérer, par encliquetage dans l'exemple représenté. Cette deuxième ouverture 64 permet de contrôler que la partie de mise en prise 44 est correctement positionnée et assure effectivement la fixation du convergent. Elle permet également un accès à cette partie de mise en prise 44, rendant possible le désengagement de cette dernière et un démontage aisé du convergent latéral.

Les échangeurs sont pourvus d'organes de réception 50 et d'organes de fixation 60 aptes à coopérer avec l'axe de pivotement et l'organe de fixation d'un convergent latéral selon l'invention afin de positionner et fixer un convergent latéral aux échangeurs, de part et d'autre de ces derniers. Ces organes 50, 60 sont donc situés sur les bords latéraux verticaux des échangeurs.

Le montage de la structure d'une face avant de véhicule décrite ci-dessus et comprenant les échangeurs 12, la traverse extrême avant 14 et deux convergents latéraux 16, 18, est réalisé de la manière suivante :
(i) fixation de la traverse extrême avant 14,
(ii) positionnement des convergents latéraux 16, 18 entre la traverse extrême avant 14 et les échangeurs 12 par insertion des axes de pivotement 30 des convergents dans les organes de réception 50 correspondant des échangeurs, chaque convergent étant alors dans une position intermédiaire de montage,
(iii) pivotement des convergents 16, 18 autour de leur axe 30 jusqu'à coopération de leur organe de fixation 40 avec l'organe de fixation 60 correspondant des échangeurs.

La position intermédiaire de montage correspond à une position verticale du convergent mais décalée d'un angle déterminé par rapport à la position verticale finale du convergent.

Les axes de pivotement et les organes de fixation des convergents selon l'invention assurent ainsi le positionnement et la fixation de chaque convergent latéral aux échangeurs, de part et d'autre de ce dernier.

Le montage des convergents latéraux peut être réalisé de manière simple et rapide malgré la présence de la traverse extrême avant, et tout en assurant une bonne étanchéité entre les convergents latéraux et les pièces environnantes. A cet effet, les bords des convergents peuvent être pourvus de joints souples.

## Revendications

1. Convergent latéral (16) pour structure de face avant (10) de véhicule, destiné à guider l'air entrant par des entrées d'air du pare-chocs du véhicule jusqu'aux échangeurs (12) situés en avant du moteur, ledit convergent étant formé d'une plaque dont le bord arrière (16a) est destiné à venir en appui contre les échangeurs et le bord avant (16b) est destiné à venir en appui contre le pare-chocs, ledit bord avant comportant en outre un logement apte à recevoir la traverse extrême avant (14) de ladite structure de face avant, **caractérisé en ce que** le bord arrière (16a) du convergent est pourvu :
- d'un axe de pivotement (30) apte à coopérer avec un organe de réception (50) correspondant prévu sur les échangeurs, et
- d'un organe de fixation (40) apte à coopérer avec un organe de fixation (60) correspondant prévu sur les échangeurs suite à une rotation du convergent latéral autour dudit axe de pivotement.

2. Convergent latéral selon la revendication 1, **caractérisé en ce que** l'axe de pivotement (30) est situé dans la moitié inférieure du bord arrière.

3. Convergent latéral selon la revendication 1 ou 2, **caractérisé en ce que** l'organe de fixation (40) est situé à proximité de l'extrémité supérieure du bord arrière.

4. Convergent latéral selon l'une des revendications 1 à 3, **caractérisé en ce que** l'organe de fixation (40) comprend une partie de guidage (42) apte à guider son introduction dans l'organe de fixation correspondant des échangeurs, et une partie de mise en prise (44) apte à venir en prise avec l'organe de fixation correspondant des échangeurs.

5. Convergent latéral selon l'une des revendications 1 à 4, **caractérisé en ce que** l'organe de fixation (40) est supporté par un support (46) présentant une forme arquée dans un plan perpendiculaire à l'axe de pivotement.

6. Structure (10) de face avant de véhicule comprenant des échangeurs (12) destinés à refroidir le moteur du véhicule et une traverse extrême avant (14), **caractérisée en ce que** les échangeurs sont pourvus d'organes de réception (50) et d'organes de fixation (60) aptes à coopérer avec l'axe de pivotement (30) et l'organe de fixation (40) d'un convergent latéral selon l'une des revendications 1 à 5 afin de positionner et fixer un convergent latéral aux échangeurs, de part et d'autre de ces derniers.

7. Procédé de montage d'une structure (10) de face avant de véhicule comprenant des échangeurs (12), une traverse extrême avant (14) et deux convergents latéraux (16, 18) selon l'une des revendications 1 à 5, les échangeurs (12) étant pourvus d'organes de réception (50) et d'organes de fixation (60) aptes à coopérer avec l'axe de pivotement (30) et l'organe de fixation (40) d'un convergent latéral selon l'une des revendications 1 à 5 afin de positionner et fixer un convergent latéral aux échangeurs, de part et d'autre de ces derniers, le procédé comprenant les étapes suivantes :
(i) fixation de la traverse extrême avant (14),
(ii) positionnement des convergents latéraux (16, 18) entre la traverse extrême avant (14) et les échangeurs (12) par insertion des axes de pivotement (30) des convergents dans les organes de réception (50) correspondant des échangeurs, chaque convergent étant alors dans une position intermédiaire de montage,
(iii) pivotement des convergents (16, 18) autour de leur axe jusqu'à coopération de leur organe de fixation (40) avec l'organe de fixation (60) correspondant des échangeurs.

## Claims

1. Side converger (16) for a vehicle front face structure (10), designed to guide the air entering via air inlets in the bumper of the vehicle to the heat exchangers (12) which are situated forward of the engine, said converger being formed of a plate whose rear edge (16a) is designed to bear on the heat exchangers and whose front edge (16b) is designed to bear on the bumper, said front edge also comprising a housing able to receive the forwardmost crossmember (14) of said front face structure; which converger is **characterized in that** the rear edge (16a) of the converger is provided with:
- a pivot pin (30) able to engage with a corresponding receiving member (50) on the heat exchangers, and
- a fixing member (40) able to engage with a corresponding fixing member (60) on the heat exchangers following rotation of the side converger about said pivot pin.

2. Side converger according to Claim 1, **characterized in that** the pivot pin (30) is situated in the lower half of the rear edge.

3. Side converger according to Claim 1 or 2, **characterized in that** the fixing member (40) is near the upper end of the rear edge.

4. Side converger according to one of Claims 1 - 3, **characterized in that** the fixing member (40) comprises a guide part (42) able to guide it as it is inserted into the corresponding fixing member of the heat exchangers and a locking part (44) able to lock onto the corresponding fixing member of the heat exchangers.

5. Side converger according to one of Claims 1 - 4, **characterized in that** the fixing member (40) is supported by a holder (46) which is arcuate in a plane perpendicular to the pivot pin.

6. Vehicle front face structure (10) comprising heat exchangers (12) designed to cool the vehicle's engine and a forwardmost crossmember (14), which structure is **characterized in that** the heat exchangers are provided with receiving members (50) and fixing members (60) able to engage with the pivot pin (30) and the fixing member (40) of a side converger according to one of Claims 1 - 5 to locate and fix a side converger to the heat exchangers, on each side of said heat exchangers.

7. Method for assembling a vehicle front face structure (10) comprising heat exchangers (12), a forwardmost crossmember (14), and two side convergers (16, 18) according to one of Claims 1 - 5, the heat exchangers (12) being provided with receiving members (50) and with fixing members (60) able to engage with the pivot pin (30) and the fixing member (40) of a side converger according to one of Claims 1 - 5 to locate and fix a side converger to the heat exchangers, on each side of said heat exchangers, the method comprising the following steps:
(i) the forwardmost crossmember (14) is fixed;
(ii) the side convergers (16, 18) are located between the forwardmost crossmember (14) and the heat exchangers (12) by inserting the pivot pins (30) of the convergers in the corresponding receiving members (50) of the heat exchangers, each converger now being in an intermediate position of assembly, and
the convergers (16, 18) are pivoted about their pin until their fixing member (40) engages with the corresponding fixing member (60) of the heat exchangers.

## Patentansprüche

1. Seitlicher Luftleiter (16) für eine Frontteilstruktur (10) eines Fahrzeugs, der dazu bestimmt ist, die durch Lufteinlässe des Stoßdämpfers des Fahrzeugs eintretende Luft bis zu den Tauschern (12) zu führen, die sich vor dem Motor befinden, wobei der Luftleiter von einer Platte geformt wird, deren hinterer Rand (16a) dazu bestimmt ist, gegen die Tauscher in Anlage zu kommen, und der vordere Rand (16b) dazu bestimmt ist, gegen den Stoßdämpfer in Anlage zu kommen, wobei der vordere Rand außerdem eine Aufnahme aufweist, die den vorderen Endquerträger (14) der Frontteilstruktur aufnehmen kann, **dadurch gekennzeichnet, dass** der hintere Rand (16a) des Luftleiters versehen ist mit:
- einer Schwenkachse (30), die mit einem entsprechenden Aufnahmeorgan (50) zusammenwirken kann, das auf den Tauschern vorgesehen ist, und
- einem Befestigungsorgan (40), das nach einer Drehung des seitlichen Luftleiters um die Schwenkachse mit einem entsprechenden Befestigungsorgan (60) zusammenwirken kann, das auf den Tauschern vorgesehen ist.

2. Seitlicher Luftleiter nach Anspruch 1, **dadurch gekennzeichnet, dass** die Schwenkachse (30) sich in der unteren Hälfte des hinteren Rands befindet.

3. Seitlicher Luftleiter nach Anspruch 1 oder 2, **dadurch gekennzeichnet, dass** das Befestigungsorgan (40) sich in der Nähe des oberen Endes des hinteren Rands befindet.

4. Seitlicher Luftleiter nach einem der Ansprüche 1 bis 3, **dadurch gekennzeichnet, dass** das Befestigungsorgan (40) einen Führungsteil (42), der seine Einführung in das entsprechende Befestigungsorgan der Tauscher führen kann, und einen Eingriffsteil (44) enthält, der mit dem entsprechenden Befestigungsorgan der Tauscher in Eingriff kommen kann.

5. Seitlicher Luftleiter nach einem der Ansprüche 1 bis 4, **dadurch gekennzeichnet, dass** das Befestigungsorgan (40) von einem Träger (46) getragen wird, der eine in einer zur Schwenkachse lotrechten Ebene gebogene Form hat.

6. Frontteilstruktur (10) eines Fahrzeugs, die Tauscher (12), die dazu bestimmt sind, den Motor des Fahrzeugs zu kühlen, und einen vorderen Endquerträger (14) enthält, **dadurch gekennzeichnet, dass** die Tauscher mit Aufnahmeorganen (50) und Befestigungsorganen (60) versehen sind, die mit der Schwenkachse (30) und dem Befestigungsorgan (40) eines seitlichen Luftleiters nach einem der Ansprüche 1 bis 5 zusammenwirken können, um einen seitlichen Luftleiter an den Tauschern zu deren beiden Seiten zu positionieren und zu befestigen.

7. Verfahren zur Montage einer Frontteilstruktur (10) eines Fahrzeugs, die Tauscher (12), einen vorderen Endquerträger (14) und zwei seitliche Luftleiter (16, 18) nach einem der Ansprüche 1 bis 5 enthält, wobei die Tauscher (12) mit Aufnahmeorganen (50) und Befestigungsorganen (60) versehen sind, die mit der Schwenkachse (30) und dem Befestigungsorgan (40) eines seitlichen Luftleiters nach einem der Ansprüche 1 bis 5 zusammenwirken können, um einen seitlichen Luftleiter an den Tauschern zu deren beiden Seiten zu positionieren und zu befestigen, wobei das Verfahren die folgenden Schritte enthält:
(i) Befestigung des vorderen Endquerträgers (14),
(ii) Positionierung der seitlichen Luftleiter (16, 18) zwischen dem vorderen Endquerträger (14) und den Tauschern (12) durch Einfügen der Schwenkachsen (30) der Luftleiter in die entsprechenden Aufnahmeorgane (50) der Tauscher, wobei jeder Luftleiter dann in einer Montagezwischenstellung ist,
(iii) Schwenken der Luftleiter (16, 18) um ihre Achse bis zum Zusammenwirken ihres Befestigungsorgans (40) mit dem entsprechenden Befestigungsorgan (60) der Tauscher.
